# FASCICULE DE BREVET EUROPEEN

(11) **EP 1 055 080 B1**
(45) Date de publication et mention de la délivrance du brevet: **23.03.2005**
(21) Numéro de dépôt: 98962504.1
(22) Date de dépôt: 18.12.1998
(51) Int. Cl.: F16L 41/06, F16L 47/00

(54) **DISPOSITIF ET PROCEDE DE MONTAGE D'UNE SELLE SUR UNE CANALISATION ET ROBINET CORRESPONDANT**
VORRICHTUNG UND VERFAHREN ZUM MONTIEREN EINES SATTELS AUF EINER DRUCKROHRLEITUNG UND DAFÜR GEEIGNETES VENTIL
DEVICE AND METHOD FOR MOUNTING A SADDLE HUB ON A PIPE AND CORRESPONDING TAP

(30) Priorité: 19.12.1997 FR 9716440
(43) Date de publication de la demande: 29.11.2000
(73) Titulaire: Saint-Germain et Straub Société Anonyme, 80531 Friville-Escarbotin Cedex (FR)
(72) Inventeur: HELLE, Jacky, F-80130 Friville-Escarbotin (FR); CALCA, Alain, F-80220 Bouvraincourt sur Bresle (FR)
(74) Mandataire: Polanz, Lothar
(86) Numéro de dépôt international: PCT/FR1998/002776
(87) Numéro de publication internationale: WO 1999/032823

(56) Documents cités:
- DE-A- 2 949 932
- DE-U- 9 408 836
- FR-A- 2 165 360
- FR-A- 2 486 195
- GB-A- 1 091 927

## Description

La présente invention concerne le montage d'une selle de dérivation sur une canalisation, notamment une canalisation d'adduction d'eau ou autre fluide liquide ou gaz. En premier lieu, elle est relative à un dispositif de montage d'une selle comportant deux moyens de fixation latéraux.

Souvent les selles connues sont des selles de robinets de dérivation ou systèmes d'obturation de canalisations, munies de deux moyens de fixation latéraux disposés sensiblement à l'opposé l'un de l'autre de manière à pouvoir serrer la selle sur la canalisation avec une pression sensiblement homogène sur toute la surface d'appui de la selle. L'assemblage de la selle et du moyen de serrage forme un collier.

Traditionnellement, les moyens de fixation sont constitués de vis et d'écrous venant serrer la selle sur la canalisation par l'intermédiaire d'une bride. Pour un même diamètre nominal intérieur, le diamètre extérieur varie en fonction du matériau, fonte, acier, ciment, matériaux plastiques, etc. Pour s'adapter à ces variations de diamètres extérieurs avec ce type de fixation, il faut changer de collier (assemblage de la selle et de la bride) pour fixer la selle sur la canalisation. Sur certains modèles de colliers, la longueur de la tige filetée des vis et la forme du collier permettent en vissant plus ou moins de s'adapter à de petites plages de variations de diamètres extérieurs des canalisations.
Ainsi, les colliers connus sont constitués de deux demi-morceaux, deux vis et deux écrous ou deux trous taraudés.

Les selles connues présentent l'inconvénient majeur de nécessiter le changement de bride et selle pour s'adapter à de grandes variations de diamètres extérieurs des canalisations correspondant à des diamètres nominaux différents. Chaque diamètre nominal de canalisation nécessite généralement au moins un collier différent, même si les colliers sont de même type. La multitude des colliers présente l'inconvénient d'obliger à augmenter les stocks pour s'adapter aux différentes canalisations.

De plus, pour les grands diamètres, notamment supérieurs à 200 mm, les brides connues sont lourdes et encombrantes, ce qui rend difficile la pose et la fixation de la selle dans la tranchée ouverte autour de la canalisation. Donc le travail de pose des selles avec brides connues sur des grands diamètres est long et fastidieux.

Des colliers connus constitués de deux demi-morceaux, deux vis et deux écrous formant une unité de liaison qui entoure un tuyau sont décrits par le document DE-U-9408836. Ce document présente un dispositif de perçage d'une canalisation, dispositif qui comporte un perçage radial contenant un raccord. Une garniture d'étanchéité est disposée entre l'unité de liaison et le tuyau. Un manchon de protection rend étanche le perçage de liaison. L'extrémité du raccord est pressée de façon étanche l'extrémité du manchon de protection.

On connaît encore des colliers de montage d'une selle de dérivation sur une canalisation restant dans les plages de petits diamètres qui ne nécessitent pas un serrage important par document FR-A-2165360. Ce document décrit une selle percée en son centre qui est appliquée avec une garniture d'étanchéité contre un tuyau à percer. La selle connue comporte deux moyens de fixation ou de serrage latéraux. La selle du dispositif comprend des évidements aptes à coopérer avec un étrier de serrage portant des corps de support à peu près semi-cylindriques. Des évidements donnent aux extrémités de l'étrier un jeu de déplacement par pivotement. Pour la fixation, des écrous de serrage possédant des broches fendues sont fixés aux extrémités de la bande de l'étrier par enroulement de deux bandes latérales qui pénètrent dans des fentes prévues dans les broches des écrous spéciaux.

Le document DE-A-2949932 divulgue un collier de montage d'une selle sur une canalisation. Ladite selle comprend des moyens de fixation latéraux d'un bracelet 11. Ce collier connu présente une chaîne constituée d'un grand nombre de pièces rigides, des maillons spéciaux adaptés aux seuls matériaux durs qui ne craignent pas le marquage d'empreinte. La chaîne est fixée par des vis traversant un perçage ménagé aux extrémités respectives de la selle connue.

L'invention a principalement pour but de permettre de façon simple et rapide le branchement d'une dérivation sur une canalisation en charge ou non transportant un fluide à une pression importante. Ceci sans stock important de pièces.

A cet effet, elle a pour objet un dispositif de montage du type précité, et tel que décrit dans la revendication indépendante 1, dans lequel le moyen de serrage est un bracelet ouvert et déformable. La selle et le bracelet forment le collier ; le bracelet comprend au moins trois moyens de fixation disposés régulièrement d'une extrémité à l'autre du bracelet de manière à s'adapter aux différents diamètres extérieurs de canalisations par le serrage d'au moins deux des trois moyens de fixation.

Plus spécifiquement, les moyens de fixation du bracelet sont ou comprennent des ouvertures aptes au passage et à la retenue des moyens de fixation de la selle. Les ouvertures sont disposées pas à pas d'une extrémité à l'autre du bracelet. La disposition pas à pas des ouvertures permet de couper à longueur le bracelet suivant le diamètre de la canalisation.

Suivant d'autres caractéristiques et afin que le serrage ne nécessite pas plus d'une seule clef notamment une clef plate ou à cliquet, le bracelet est monté à pivotement sur la selle, montage tel qu'un rabattement fermé d'une extrémité du bracelet autour d'un té constituant un des moyens de fixation latéraux de la selle, une ouverture du bracelet se situant à l'extrémité du rabattement pour permettre le passage de la partie de raccordement du té de la selle ; le bracelet est muni d'un moyen de fixation réversible tel qu'une vis traversant une autre ouverture située à sa deuxième extrémité, ladite vis venant fixer la deuxième extrémité du bracelet sur le deuxième moyen de fixation de la selle.

Les rabattements fermés d'extrémité du bracelet sont disposés sur la face du bracelet destinée à être serrée sur la canalisation de manière à pincer au moins un rabattement entre ladite canalisation et les bords extérieurs du bracelet.

Dans le but d'obtenir après préparation un collier ne formant qu'un seul ensemble monobloc, la deuxième extrémité du bracelet selon l'invention est rabattue fermée autour d'une pièce de retenue mobile de forme cylindrique percée et taraudée formant écrou monté coulissant et tournant dans le rabattement de l'extrémité dudit bracelet. La vis vient se fixer d'une part dans l'écrou après avoir traversée l'ouverture se situant à l'extrémité du rabattement du bracelet, d'autre part, la tête de vis vient se rabattre et se serrer sur deux pattes disposées en forme de fourche pour constituer le deuxième moyen de fixation latéral de la selle. La tête de vis est maintenue dans l'axe de fixation par une rondelle présentant une face plate et l'autre face bombée est montée sur la vis, la surface plate au contact de la tête de vis et la surface bombée coopérant avec une empreinte bombée creuse disposée au creux de ladite fourche.
Ces caractéristiques augmentent la résistance des moyens de fixation tout en permettant un grand débattement de la vis et du bracelet. Elles évitent l'encombrement des demi-morceaux de colliers connus avec des vis, des brides épaisses et lourdes et le démontage en différentes pièces qui entraînent des risques de pertes et de confusion entre les éléments de colliers de tailles différentes mais avec des pièces qui se ressemblent.

De manière à obtenir l'étanchéité lors de la fixation du branchement de prise en charge, la selle de dérivation de la canalisation notamment en charge présente sensiblement en son centre une tubulure débouchante d'axe radiale par rapport à l'axe de la canalisation. Un joint souple réalisé en un matériau qui flue comme du caoutchouc est fixé dans un logement et un manchon est ajusté dans la tubulure, un deuxième joint est placé dans le prolongement du manchon au contact du moyen de fixation du branchement de dérivation, moyen tel qu'un taraudage, les deux joints et le manchon présentant un diamètre intérieur sensiblement supérieur au diamètre de perçage pour former une dérivation à la canalisation. L'utilisation des deux joints et du manchon permet le serrage plus
ou moins fort du branchement par rapport au collier suivant le diamètre de la canalisation.

Des perforations oblongues disposées longitudinalement par rapport à la longueur du bracelet permettent la mise en place dudit bracelet par rotation d'un quart de tour après pénétration du té.

Afin de résister à la corrosion aérienne et la corrosion des sols, la selle étant notamment fabriquée en bronze, le bracelet comprend principalement une bande de matériau non corrodable, pouvant être sectionnée à la longueur permettant d'entourer la canalisation. Les bandes de métaux inoxydables peuvent être revêtue éventuellement d'un matériau inerte tel qu'une composition à base de poudre d'époxy. Les bandes du bracelet peuvent aussi être réalisées en matériau plastique.

Cette bande inoxydable revêtue résiste très bien à toute corrosion chimique avec les canalisations à base ferreuse.
Selle, bracelet, vis, rondelle et écrou résistent à la corrosion aérienne qu'ils subissent lors du stockage avant la pose sur la canalisation. Ce bracelet résiste à plus de mille heures en brouillard salin sans aucune corrosion.
L'invention a encore pour objet un procédé de fixation d'un dispositif de branchement d'une canalisation auxiliaire de dérivation sur une canalisation en charge ou non, comprenant les étapes successives suivantes :
- préparation d'un collier tel que défini ci-dessus le bracelet étant mis à longueur suivant le diamètre de la canalisation,
- présentation et formage du collier sur la canalisation,
- serrage de l'ensemble en position de fonctionnement,
- vissage et serrage d'un dispositif de branchement sur la selle,
- montage étanche d'une machine à percer équipée d'un foret sur la tubulure supérieure de la chambre du dispositif de branchement,
- perçage de la canalisation,
- démontage de la machine à percer,
- fermeture du dispositif de branchement,
- raccordement du système de dérivation à la canalisation auxiliaire.

L'invention a également pour objet un robinet de dérivation de canalisation comprenant un corps et une selle, le corps et la selle étant réalisés en un seul ensemble monobloc et/ou monopièce et comportant au moins deux moyens de fixation latéraux, les moyens de fixation étant radiaux par rapport à l'axe du corps du robinet, se situant sensiblement à l'opposé l'un de l'autre et étant munis d'un dispositif de montage sur la canalisation, caractérisé en ce que ledit dispositif est tel que décrit ci -dessus.

Un exemple non limitatif de l'invention va maintenant être décrit en regard des dessins annexés sur lesquels:
- la Fig. 1 représente schématiquement, en coupe verticale un collier, conforme à l'invention, fixé à des canalisations de trois diamètres extérieurs différents ;
- la Fig. 2 représente une selle conforme à l'invention vue de dessus, avec son bracelet sur la canalisation ;
- la Fig. 3 est une bande inoxydable, pièce d'un bracelet ouvert conforme à l'invention ;
- la Fig. 4 représente schématiquement un branchement au moyen d'un robinet de prise en charge avec un dispositif de conforme à l'invention.
- la Fig. 5 représente un joint de collier selon l'invention vue en demi-coupe.

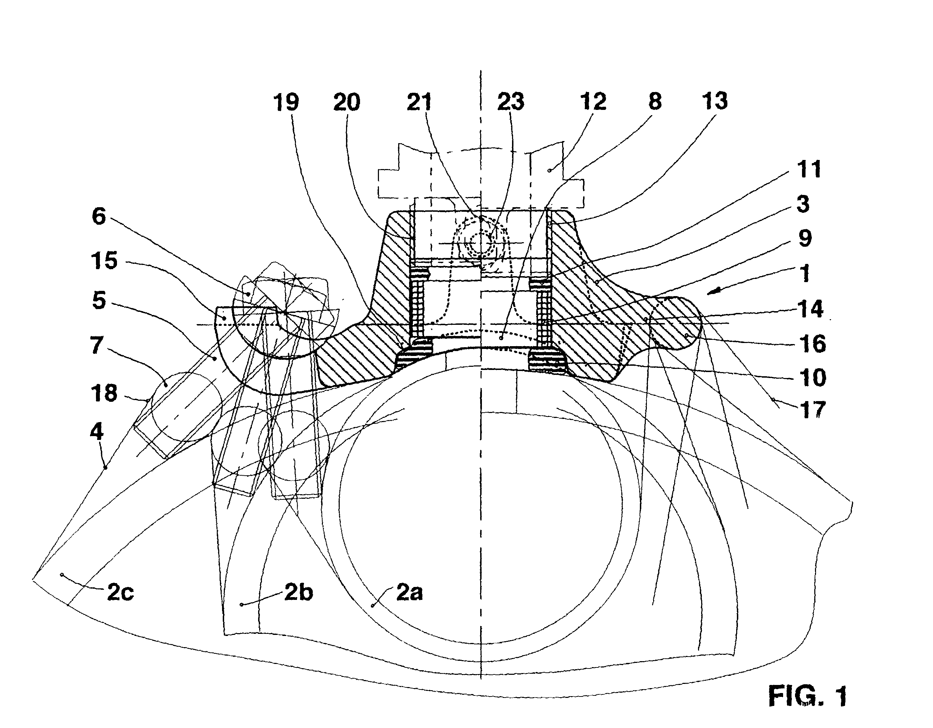

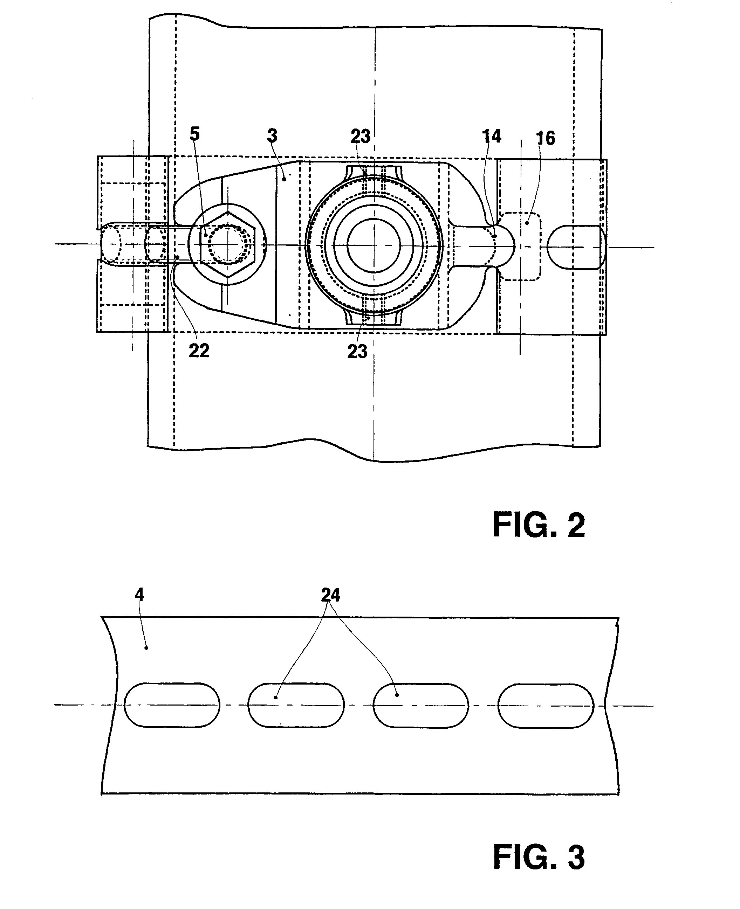

Le collier 1 monté sur des canalisations 2a, 2b, 2c de différents diamètres extérieurs représenté à la Fig. 1 comporte une selle 3, un feuillard métallique inoxydable 4 formant bracelet ouvert et déformable. Une vis de serrage 5 fixée à un écrou cylindrique 7 lié au feuillard 4 pivote par l'intermédilaire d'une rondelle 6 en forme de demi-sphère. La selle 3 comprend une tubulure axiale 8 munie d'un manchon intermédiaire 9 adjacent à deux joints 10, 11. Un robinet 12 de prise en charge du fluide circulant dans la canalisation 2a, 2b, 2c est vissé sur la selle 3 au moyen de son extrémité filetée 13.
La selle 3 comprend deux moyens de fixation latéraux 14, 15, le moyen de fixation 14 est un té dont l'extrémité cylindrique 16 est d'axe parallèle à l'axe de la canalisation. L'autre moyen de fixation latéral 15 est situé à l'opposé du moyen de fixation 14. Une extrémité 17 du feuillard 4 est rabattue fermée autour de l'extrémité 16 du té de la selle 3, l'autre extrémité du feuillard 18 est rabattue fermée sur l'écrou cylindrique 7. Le vissage de la vis 5 dans l'écrou 7 maintient le collier serré sur la canalisation. Si la canalisation 2a est de petit diamètre, la vis 5 serrée est rabattue vers l'axe de la tubulure 8. La tubulure 8 est d'axe radial par rapport à l'axe de la canalisation, un logement inférieur 19 de la tubulure facilite l'emboîtement du joint inférieur 10 comprimé dans le logement 19 entre le manchon 9 et la surface de la canalisation 2a. Le joint inférieur 10 assure l'étanchéité entre la canalisation 2a et le manchon 9. Si la selle 3 est fixée sur une canalisation 2 b de diamètre extérieur moyen, la vis 5 pivote sur la rondelle en forme de demi-sphère 6 et est plus ouverte que pour une fixation de la selle 3 sur une canalisation 2a de petit diamètre. Le joint inférieur 10 épouse la surface de la canalisation 2b. Bien que la canalisation 2b de diamètre extérieur supérieur à celui de la canalisation 2a s'enfonce moins profondément dans la tubulure 8, l'étanchéité entre la canalisation 2b et le manchon 9 est assurée par un serrage plus fort du robinet sur la selle. Ce serrage entraîne la compression du manchon 9 sur le joint 10. D'où étanchéité entre le manchon 9, le joint 10 et la canalisation 2b. Dans le cas où la selle 3 est fixée sur une canalisation de grand diamètre 2c, la vis 4 pivote davantage et le robinet est serré davantage lui aussi de manière à pousser le manchon 9 sur le joint inférieur 10 jusqu' à obtenir étanchéité entre le joint 10 et le manchon 9. La selle 3 est toujours maintenue serrée sur la canalisation 2c et le joint inférieur 10 assure aussi l'étanchéité entre la canalisation 2c et le manchon 9. Le robinet 12 est vissé dans la tubulure 8 avec le filetage 20. Le robinet 12 comprime le joint supérieur 11 sur le manchon 9 et est verrouillé par une vis de blocage 21. Le joint supérieur 11 assure l'étanchéité entre le robinet 12 et le manchon 9.
Comme le montre plus particulièrement la Fig. 2, le moyen de fixation 15 de la selle 3 est constitué de deux pattes qui forme une fourche. La tige de la vis 5 passe par la rainure 22 formée entre les deux pattes de la fourche 15 L'ouverture latérale de cette rainure permet le pivotement et le passage de la tige filetée de la vis même déjà engagée dans l'écrou cylindrique 7. Une empreinte sphérique creuse ménagée au creux de la fourche 15 forme le logement de la rondelle 6 en lui permettant d'avoir une fonction de rotule tout en obtenant une traction importante de la vis 5.
L'extrémité de la selle en forme de fourche 15 permet un montage rapide sans avoir à enlever la vis de son écrou cylindrique, donc évite la perte de toute pièce, l'ensemble du collier étant monobloc au moment du montage.
Deux perçages taraudés sont disposés radialement à la tubulure 8 dans la partie supérieure de la selle 3. Ces perçages reçoivent une vis de verrouillage 21 qui empêche le desserrage du robinet 12 par rapport à la selle 3 lors des manoeuvres du robinet 12.
Le feuillard 4 comprend d'une extrémité à l'autre des ouvertures 24 disposées pas à pas comme représenté sur la Fig. 3. Ces ouvertures 24 sont oblongues et disposées longitudinalement par rapport à la longueur du feuillard 4. Ces formes et dispositions des ouvertures 24 permettent d'enfiler l'extrémité 17 du feuillard sur le té 14 et de le fixer par rotation et rabattement. Ces ouvertures permettent aussi le passage de la tige de la vis 5 depuis l'écrou cylindrique 7 en direction de la selle 3 et de l'extrémité de la tige qui dépasse de l'écrou cylindrique 7.
En variante certaines ouvertures peuvent ne pas être oblongues.

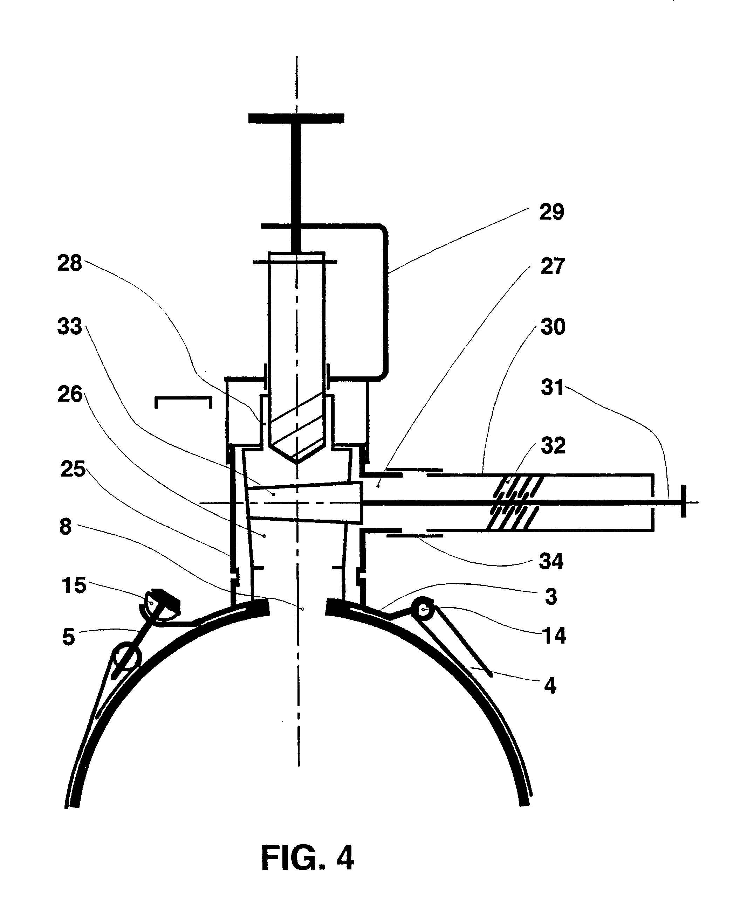

La Fig. 4 représente un branchement sur une conduite en charge d'un robinet de dérivation à soupape du type à axe de manoeuvre vertical 12. Les éléments du dispositif de fixation sont repérés par les mêmes références numériques que les éléments correspondant du dispositif de fixation représenté sur les Fig. 1 à 3. La tubulure d'entrée 8 est fixée de manière étanche sur la canalisation 2 par serrage du bracelet 4 sur les moyens de fixation latéraux 14, 15 du collier 1. La tubulure 8 débouche dans une chambre 26 dans la partie supérieure du corps de robinet 25. En partie haute la chambre 26 débouche sur deux tubulures, une tubulure latérale 27 et une tubulure verticale 28 Une machine à percer 29 est montée sur le corps 25 dans l'axe de la tubulure 28 de la chambre 26 et de la tubulure 8. Un obturateur 30 est monté sur le robinet 12 au regard de la tubulure latérale 27. L'obturateur est constitué d'une vis 31 guidée dans un fourreau 32 la vis déplaçant une tête d'obturation 33 qui peut rentrer dans le fourreau 32 prolongé par une entretoise 34. La tête d'obturation peut également sortir du fourreau 30 pour obturer de manière étanche la partie haute de la chambre 26.
La fixation et le branchement selon l'invention d'un robinet de prise en charge s'effectuent de la manière suivante, un feuillard 4 percé pas à pas d'ouvertures oblongues est découpé à la longueur prévue pour correspondre au diamètre extérieur de la canalisation d'adduction d'eau. Le feuillard est revêtu d'un matériau constitué à base de poudre d'époxy, ce qui arrondit les tranchants des bords. Une extrémité du feuillard 4 est introduite dans le té 14 par une lumière oblongue en partant du bout du feuillard 4. Une rotation verrouille le feuillard sur le té 14. L'écrou cylindrique 7 est placé dans l'autre extrémité du feuillard 4. Les deux extrémités sont rabattues fermées, une ouverture oblongue constituant une lumière au regard de chaque extrémité. La vis 5 vient verrouiller l'écrou 7 en passant par la deuxième ouverture en partant du bout du feuillard 4, deuxième ouverture qui forme la lumière d'extrémité du fait du rabattement du bord de l'extrémité 18 du feuillard. La selle 3, le feuillard 4 formant bracelet et la vis 5 ne forment plus qu'un seul ensemble, le bracelet pouvant pivoter par rapport à la selle 3 sur la partie cylindrique du té 16.

Une seule personne suffit pour placer le collier 1 sur la canalisation 2, refermer le bracelet autour de la canalisation, placer et visser la vis 5 dans la rainure 22 ce qui serre et immobilise le collier sur la canalisation 2. Le robinet 12 est vissé sur la selle 3 dans la variante où la selle 3 et le robinet 12 sont constitués de pièces différentes. La machine à percer 29 et l'obturateur 30 sont montés sur le robinet 12. Ensuite la canalisation 2 est percée, puis le foret de la machine à percer 29 est remonté. La tête d'obturation 33 est avancée et assure l'étanchéité de la partie haute de la chambre 26. La machine à percer 29 est démontée. Un bouchon vient fermer la tubulure 28. La tête d'obturation est reculée et la fermeture du robinet 12 permet le démontage de l'obturateur, suivi du raccordement de la canalisation principale 2a, 2b, 2c à une canalisation auxiliaire de dérivation.

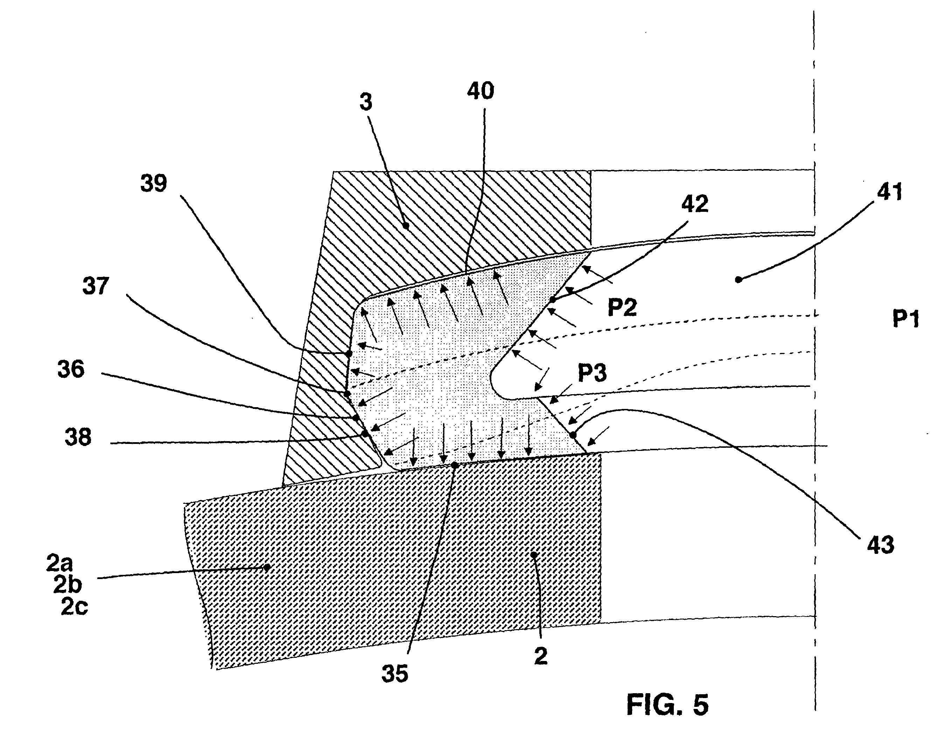

En variante, la selle 3 et le corps 25 du robinet 12 de dérivation de canalisation en charge sont réalisés en un seul ensemble présentant une tubulure d'entrée apte à être fixée de manière étanche sur la canalisation 2a, 2b, 2c, ladite tubulure d'entrée débouchant dans une chambre comportant dans sa partie supérieure une tubulure de sortie latérale 27, la chambre 26 comprenant une tubulure supérieure verticale 28 destinée à être obturée recevant de façon étanche une machine à percer 29.
Suivant une autre variante de réalisation l'étanchéité entre le collier et la canalisation 2 est assurée par un joint à lèvres monopièce telle que représenté sur la Fig. 5. La face inférieure 35 du joint est concave avec un rayon de courbure au moins égal au rayon de courbure de la canalisation 2. Sa partie périphérique 36 présente une arête débordante 37 la séparant en au moins deux faces 38, 39. La face supérieure 40 du joint est confondue avec un rayon de courbure lui donnant un aspect bombé. Les faces périphériques et supérieure 38, 39, 40 du joint à lèvres viennent se loger dans l'empreinte prévue sous la semelle de la selle 3. La partie intérieure 41 délimitant le creux dudit joint présente un angle rentrant ouvert séparant au moins deux faces 42, 43 de pentes différentes. La face intérieure supérieure 42 ayant une orientation vers le haut et la face intérieure inférieure 43 ayant une orientation vers le bas la pression du fluide P1 passant dans le creux du joint à lèvres se décompose en des composantes dont une P2 est dirigée vers le haut de l'empreinte et une autre P3 est dirigée vers la surface de la canalisation 2 via les faces extérieures du joint. Ledit joint est apte à maintenir l'étanchéité avec des canalisations 2a, 2b, 2c de différents diamètres par variation en intensité et emplacement de la pression et de la compression sur la canalisation 2a, 2b, 2c quelque soit son diamètre.

Les signes de références insérés après les caractéristiques techniques mentionnées dans les revendications ont pour seul but de faciliter la compréhension de ces dernières et n'en limitent aucunement la portée.

## Revendications

1. Dispositif de montage d'une selle (3) de dérivation sur une canalisation, la selle comportant au moins deux moyens de fixation ou de serrage latéraux (14,15), ladite selle étant éventuellement une selle de robinet de dérivation ou d'obturation (12) destinée à être montée de manière étanche sur la canalisation, le dispositif de montage comprenant un moyen de serrage de la selle et des moyens de fixation aptes à coopérer avec les moyens de fixation de ladite selle, le moyen de serrage étant un bracelet ouvert et déformable (4), la selle (3) et le bracelet (4) formant un collier, **caractérisé en ce que** les moyens de fixation sont disposés régulièrement d'une extrémité à l'autre dudit bracelet de manière à s'adapter aux différents diamètres extérieurs de canalisations par le raccordement et le serrage d'au moins deux moyens de fixation du bracelet (4) aux moyens de fixation (14,15) de la selle (3), le bracelet comprenant principalement une bande et étant monté à pivotement sur la selle (3), le moyen de pivotement comprenant au moins une pièce de retenue mobile percée et taraudée montée coulissant et tournant dans au moins une extrémité du bracelet, l'extrémité du bracelet étant rabattue autour de la pièce mobile, les moyens de fixation comprenant au moins une ouverture apte au passage de la vis destinée à coopérer avec le moyens de pivotement.

2. Dispositif selon la revendication précédente, **caractérisé en ce que** la selle (3) de dérivation de la canalisation notamment en charge présente sensiblement en son centre une tubulure débouchante (8) d'axe radial par rapport à l'axe de la canalisation, un joint souple (10) surmonté d'un manchon (9) étant ajusté dans la tubulure, un deuxième joint (11) étant placé dans le prolongement du manchon (9) au contact du moyen de fixation du branchement de dérivation (12), moyen tel qu'un taraudage, les deux joints (10,11) et le manchon (9) présentant un diamètre intérieur sensiblement supérieur au diamètre de perçage pour former une dérivation à la canalisation.

3. Dispositif selon la revendication 1, **caractérisé en ce que** l'étanchéité entre le collier et la canalisation (2) est assurée par un joint à lèvres monopièce de face inférieure (35) concave avec un rayon de courbure au moins égal au rayon de courbure de la canalisation (2), sa partie périphérique (36) présentant une arête débordante (37) la séparant en au moins deux faces (38, 39), la face supérieure(40) du joint étant confondue avec un rayon de courbure lui donnant un aspect bombée, les faces périphériques et supérieure (38, 39, 40) venant se loger dans l'empreinte prévue sous la semelle de la selle (3), la partie intérieure (41) délimitant le creux présentant dudit joint un angle rentrant ouvert séparant au moins deux faces (42, 43) de pentes différentes, la face intérieure supérieure (42) ayant une orientation vers le haut et la face intérieure inférieure (43) ayant une orientation vers le bas la pression du fluide (P1) passant dans le creux du joint à lèvres se décompose en des composantes dont une (P2) est dirigée vers le haut l'empreinte et une autre (P3) est dirigée vers la surface de la canalisation (2) via les faces extérieures du joint, ledit joint étant apte à maintenir l'étanchéité avec des canalisations (2a, 2b, 2c) de différents diamètres par variation en intensité et emplacement de la pression et de la compression sur la canalisation (2a, 2b, 2c) quelque soit son diamètre.

4. Dispositif selon la revendication 1, **caractérisé en ce que** les moyens de fixation sont disposés régulièrement d'une extrémité à l'autre dudit bracelet de manière à s'adapter aux différents diamètres extérieurs de canalisations par le raccordement et le serrage d'au moins deux moyens de fixation du bracelet (4) aux moyens de fixation (14,15) de la selle (3), le bracelet étant monté à pivotement sur la selle (3), une extrémité du bracelet étant rabattue fermée autour d'une pièce de retenue mobile percée et taraudée formant écrou (7) de forme cylindrique permettant de coulisser et de tourner dans le rabattement de l'extrémité dudit bracelet, les moyens de fixation comprenant au moins une ouverture apte au passage de la vis destinée à coopérer avec le moyens de pivotement ; la vis (5) venant se fixer d'une part dans l'écrou cylindrique (7) après avoir traversé une ouverture se situant à l'extrémité du rabattement du bracelet, d'autre part, la tête de vis (5) venant se rabattre et se serrer sur deux pattes disposées en forme de fourche (15) pour constituer un moyen de fixation latéral de la selle.

5. Dispositif selon la revendication précédente, **caractérisé en ce que** le bracelet étant monté à pivotement sur la selle (3) par un rabattement fermé d'une extrémité du bracelet autour pièce de retenue mobile percée et taraudée formant l'écrou cylindrique (7) qui combiné avec un moyen de fixation réversible tel qu'une vis (5)forme un té constituant un des moyens de fixation latéraux (14,15) de la selle (3), une ouverture du bracelet se situant à l'extrémité du rabattement pour permettre le passage de la partie de raccordement du té de la selle (3), le moyen de fixation réversible tel que la vis (5) traversant une autre ouverture située à son extrémité plus près de la limite bracelet, ladite vis venant fixer l'extrémité du bracelet au moyen de fixation de la selle.

6. Dispositif selon l'une des revendications 4 ou 5, **caractérisé en ce que** les moyens de fixation du bracelet depuis une première extrémité sont ou comprennent des ouvertures (24) aptes au passage et à la retenue des moyens de fixation de la selle, les moyens de fixation étant disposés pas à pas depuis l'autre extrémité dudit bracelet.

7. Dispositif selon l'une des revendications 4 à 6, **caractérisé en ce que** les moyens de mise en place du bracelet ouvert et déformable comprennent ou sont des ouvertures oblongues (24) disposées longitudinalement par rapport à la longueur du bracelet, en particulier les rabattements fermés d'extrémité du bracelet (4) étant disposés sur la face du bracelet destinée à être serrée sur la canalisation de manière à pincer au moins un rabattement entre ladite canalisation et les bords extérieurs du bracelet (4), typiquement une rondelle (6) présentant une face plate et l'autre face bombée étant montée sur la vis (5), la surface plate au contact de la tête de vis (5) et la surface bombée coopérant avec une empreinte bombée creuse disposée au creux de la fourche (15).

8. Dispositif selon l'une quelconque des revendications 4 à 7, la selle (3) étant notamment fabriquée en bronze, **caractérisé en ce que** le bracelet comprend principalement une bande de matériau non corrodable (4) en particulier un feuillard revêtu d'un matériau inerte tel qu'une composition à base de poudre d'époxy.

9. Procédé de fixation d'un dispositif de branchement d'une canalisation auxiliaire de dérivation sur une canalisation d'adduction d'eau en charge ou non, **caractérisé en ce que** ladite canalisation étant aussi bien de diamètre, inférieur à la distance séparant les deux moyens de fixation latéraux de la selle (2a), sensiblement égal à la distance séparant les deux moyens de fixation latéraux de la selle (2b) que supérieure à la distance séparant les deux moyens de fixation latéraux de la selle (2c), il comprend au moins les étapes successives suivantes :
- préparation d'un collier (1) conforme à l'une des revendications 1 à 8, le bracelet étant mis à longueur suivant le diamètre de la canalisation (2a, 2b, 2c),
- présentation et formage du collier (1) sur la canalisation,- serrage de l'ensemble en position de fonctionnement,
- vissage et serrage du dispositif de branchement sur la selle,
- montage étanche d'une machine à percer (29) équipée d'un foret sur la tubulure supérieure (28) de la chambre du dispositif de branchement,
- perçage de la canalisation,
- démontage de la machine à percer (29),
- fermeture du dispositif de branchement,
- raccordement du système de dérivation à la canalisation auxiliaire.

10. Procédé selon la revendication précédente, **caractérisé en ce que** le formage du collier (1) sur la canalisation est obtenu par un montage à pivotement, le serrage de l'ensemble en position de fonctionnement étant effectué avec une seule clef.

11. Robinet (12) de dérivation de canalisation comprenant un corps (25) et une selle (3), le corps et la selle étant réalisés en un seul ensemble monobloc et/ou monopièce et comportant au moins deux moyens de fixation latéraux (14,15),les moyens de fixation (14, 15) étant radiaux par rapport à l'axe du corps du robinet(12), se situant sensiblement à l'opposé l'un de l'autre et étant munis d'un dispositif de montage sur la canalisation, **caractérisé en ce que** ledit dispositif est conforme à l'une quelconque des revendications 1 à 8.

## Patentansprüche

1. Vorrichtung zur Montage einer Unterlageplatte (3) für eine Abzweigung auf einer Rohrleitung, wobei die Unterlageplatte mindestens zwei Einrichtungen zur seitlichen Befestigung bzw. zum seitlichen Einspannen (14, 15) aufweist und wobei die Unterlageplatte gegebenenfalls eine Unterlageplatte für einen Abzweighahn oder einen Verschlusshahn (12) ist, die zur Anbringung unter Abdichtung auf der Rohrleitung bestimmt ist, wobei die Montagevorrichtung eine Einrichtung zum Festspannen der Unterlageplatte und Befestigungseinrichtungen aufweist, die zum Zusammenwirken mit den Befestigungseinrichtungen der Unterlageplatte geeignet sind, und wobei die Spanneinrichtung ein offener und verformbarer Ring (4) ist und die Unterlageplatte (3) und der Ring (4) eine Schelle bilden, **dadurch gekennzeichnet, dass** die Befestigungseinrichtungen in regelmäßigen Abständen von einem Ende des Rings zum anderen in der Weise angeordnet sind, dass sie sich an unterschiedliche Außendurchmesser von Rohrleitungen durch Verbinden und Festspannen von mindestens zwei Einrichtungen zur Befestigung des Rings (4) an den Befestigungseinrichtungen (14, 15) der Unterlageplatte (3) anpassen, wobei der Ring hauptsächlich ein Band aufweist und verschwenkbar auf der Unterlageplatte (3) angebracht ist, und wobei die Schwenkeinrichtung mindestens ein Teil zur beweglichen Halterung aufweist, das eine Bohrung mit Innengewinde besitzt und gleitend und drehbar in mindestens einem Ende des Rings angebracht ist, wobei das Ende des Rings um das bewegliche Teil umgeschlagen ist und wobei die Befestigungseinrichtungen mindestens eine Öffnung aufweisen, die für den Durchtritt der zum Zusammenwirken mit der Schwenkeinrichtung bestimmten Schraube ausgelegt ist.

2. Vorrichtung nach dem vorhergehenden Anspruch, **dadurch gekennzeichnet, dass** die Unterlageplatte (3) für eine Abzweigung auf der vornehmlich belasteten Rohrleitung im Wesentlichen in ihrer Mitte einen Auslassstutzen (8) aufweist, dessen Achse radial bezüglich der Achse der Rohrleitung verläuft, wobei eine elastische Dichtung (10) mit darüber angeordneter Muffe (9) in den Stutzen eingepasst ist und eine zweite Dichtung (11) in Kontakt mit der Befestigungseinrichtung wie zum Beispiel einem Innengewinde des Leitungsanschlusses (12) in der Verlängerung der Muffe (9) angeordnet ist, und wobei die beiden Dichtungen (10, 11) und die Muffe (9) einen Innendurchmesser aufweisen, der im Wesentlichen größer als der Bohrungsdurchmesser ist, um so eine Abzweigung an der Rohrleitung zu bilden.

3. Vorrichtung nach Anspruch 1, **dadurch gekennzeichnet, dass** die Abdichtung zwischen der Schelle und der Rohrleitung (2) durch eine einteilig ausgeführte Lippendichtung mit konkaver Innenfläche (35) gebildet ist, deren Krümmungsradius mindestens gleich dem Krümmungsradius der Rohrleitung (2) ist, wobei ihr peripherer Abschnitt (36) eine überstehende Kante (37) aufweist, welche sie in mindestens zwei Teilflächen (38, 39) unterteilt, wobei die Oberseite (40) der Dichtung in einen Krümmungsradius übergeht, welcher ihr ein gewölbtes Aussehen verleiht, wobei die peripheren Flächen und die Oberseite (38, 39, 40) in der Vertiefung zu liegen kommen, die unter der Sohle der Unterlageplatte (3) vorgesehen ist, wobei der innen liegende Abschnitt (41) den Hohlraum begrenzt, der an der Dichtung einen offenen einspringenden Winkel aufweist, welcher mindestens zwei Flächen (42, 43) mit unterschiedlicher Neigung von einander trennt, und wobei die innen liegende obere Fläche (42) eine Ausrichtung nach oben besitzt und die innen liegende untere Fläche (43) eine Ausrichtung nach unten aufweist, und wobei der Druck des Strömungsmittels (P1), das durch den Hohlraum der Lippendichtung strömt, in Komponenten zerlegt wird, von denen die eine (P2) zum oberen Teil der Vertiefung gerichtet ist, während eine andere Komponente (P3) zur Oberfläche der Rohrleitung (2) über die Außenflächen der Dichtung gerichtet ist, und wobei die Dichtung dazu ausgelegt ist, die Abdichtung gegenüber Rohrleitungen (2a, 2b, 2c) mit unterschiedlichem Durchmesser durch Veränderung der Stärke und des Orts des Drucks sowie der Druckkraft auf die Rohrleitung (2a, 2b, 2c) unabhängig von deren Durchmesser aufrecht zu erhalten.

4. Vorrichtung nach Anspruch 1, **dadurch gekennzeichnet, dass** die Befestigungseinrichtungen in regelmäßigen Abständen von einem Ende des Rings zum anderen in der Weise angeordnet sind, dass sie sich an verschiedene Außendurchmesser von Rohrleitungen durch den Anschluss und die Festspannung von mindestens zwei Einrichtungen zur Befestigung des Rings (4) an den Befestigungseinrichtungen (14, 15) der Unterlageplatte (3) anpassen, wobei der Ring verschwenkbar auf der Unterlageplatte angebracht ist und ein Ende des Rings um ein bewegliches Halteteil mit Bohrung und Innengewinde geschlossen umgeschlagen ist, welches eine zylinderförmige Mutter (7) bildet, die eine Gleitbewegung und Drehbewegung in dem Umschlag am Ende des Rings gestattet, wobei die Befestigungseinrichtungen mindestens eine Öffnung aufweisen, die für den Durchtritt der zum Zusammenwirken mit der Schwenkeinrichtung bestimmten Schraube geeignet ist, wobei die Schraube (5) zum einen nach dem Durchtritt durch eine Öffnung, die sich am Umschlagende des Rings befindet, in der zylinderförmigen Mutter (7) befestigt ist und der Kopf der Schraube (5) zum anderen auf zwei gabelförmig (15) angeordneten Laschen umgeschlagen und festgespannt wird, wodurch eine Einrichtung zur seitlichen Befestigung der Unterlageplatte gebildet wird.

5. Vorrichtung nach dem vorhergehenden Anspruch, **dadurch gekennzeichnet dass** der Ring verschwenkbar durch einen geschlossenen Umschlag auf der Unterlageplatte (3) angebracht ist, der an einem Ende des Rings um ein bewegliches Halteteil mit Bohrung und Innengewinde gebildet ist, welches die zylinderförmige Mutter (7) bildet, welche in Verbindung mit einer Einrichtung zur lösbaren Befestigung wie zum Beispiel einer Schraube (5) ein T-Stück bildet, das eine der Einrichtungen (14, 15) zur seitlichen Befestigung der Unterlageplatte (3) bildet, wobei sich eine Öffnung des Rings am Ende des Umschlags befindet, um den Durchtritt des Anschlussabschnitts des T-Stücks der Unterlageplatte (3) zu ermöglichen, und wobei die Einrichtung zur lösbaren Befestigung wie zum Beispiel die Schraube (5) durch eine weitere Öffnung geführt ist, die sich an dem näher zur Begrenzung des Rings hin liegenden Ende befindet, wobei die Schraube das Ende des Rings an der Einrichtung zur Befestigung der Unterlageplatte befestigt.

6. Vorrichtung nach einem der Ansprüche 4 oder 5, **dadurch gekennzeichnet, dass** die Einrichtungen zur Befestigung des Rings von einem ersten Ende aus Öffnungen (24) sind oder aufweisen, die für den Durchtritt und die Halterung der Einrichtungen zur Befestigung der Unterlageplatte ausgelegt sind, wobei die Befestigungseinrichtungen schrittweise vom anderen Ende des Rings her angeordnet sind.

7. Vorrichtung nach einem der Ansprüche 4 bis 6, **dadurch gekennzeichnet, dass** die Einrichtungen zur Anordnung des offenen und verformbaren Rings lang gestreckte Öffnungen (24) sind oder aufweisen, die, bezogen auf die Länge des Rings, in Längsrichtung angeordnet sind, wobei insbesondere die geschlossenen Umschläge am Ende des Rings (4) auf der Fläche des Rings angeordnet sind, die zum Festspannen auf der Rohrleitung in der Weise bestimmt sind, dass mindestens ein Umschlag zwischen der Rohrleitung und den Außenkanten des Rings (4) festgeklemmt wird, wobei im typischen Fall eine Beilagscheibe (6), die eine ebene Fläche aufweist und deren andere Fläche gewölbt ist, auf der Schraube (5) angebracht ist, und wobei die ebene Fläche, die mit dem Kopf der Schraube (5) in Berührung kommt, und die gewölbte Fläche mit einer hohlen gewölbten Vertiefung zusammenwirken, die in der Lücke der Gabelung (15) angeordnet ist.

8. Vorrichtung nach einem der Ansprüche 4 bis 7, bei welcher die Unterlageplatte (3) vornehmlich aus Bronze hergestellt ist, **dadurch gekennzeichnet, dass** der Ring hauptsächlich ein Band aus korrosionsbeständigem Werkstoff (4) aufweist, insbesondere aus einem Bandstahl, der mit einem neutralen Werkstoff wie zum Beispiel einer Zusammensetzung auf der Grundlage von Epoxidpulver überzogen ist.

9. Verfahren zum Befestigen einer Anschlussvorrichtung auf einer Hilfszweigleitung auf einer belasteten oder unbelasteten Rohrleitung zur Wasserzuleitung, **dadurch gekennzeichnet, dass** die Rohrleitung, die einen Durchmesser besitzt, der kleiner ist als der Abstand, der die beiden Einrichtungen zur. seitlichen Befestigung der Unterlageplatte (2a) von einander trennt, und der im Wesentlichen gleich dem Abstand ist, welcher die beiden Einrichtungen zur seitlichen Befestigung der Unterlageplatte (2b) von einander trennt, und der größer als der Abstand ist, welcher die beiden Einrichtungen zur seitlichen Befestigung der Unterlageplatte (2c) von einander trennt, wobei das Verfahren zumindest die folgenden auf einander folgenden Arbeitsschritte umfasst:
- Vorbereiten einer Schelle (1) gemäß einem der Ansprüche 1 bis 8, wobei der Ring entsprechend dem Durchmesser der Rohrleitung (2a, 2b, 2c) auf die richtige Länge gebracht wird,
- Aufsetzen und Formen der Schelle (1) auf der Rohrleitung und Festspannen des Verbunds in der Betriebsstellung,
- Aufschrauben und Festspannen der Anschlussvorrichtung auf der Unterlageplatte,
- Aufmontieren einer Bohrmaschine (29) mit einem eingesetzten Bohrer unter Abdichtung auf den oberen Rohrstutzen (28) der Kammer der Anschlussvorrichtung,
- Aufbohren der Rohrleitung,
- Abmontieren der Bohrmaschine (29),
- Verschließen der Anschlussvorrichtung,
- Anschließen des Abzweigsystems an die Hilfsrohrleitung.

10. Verfahren nach dem vorhergehenden Anspruch, **dadurch gekennzeichnet, dass** die Bildung der Schelle auf der Rohrleitung durch verschwenkbares Aufmontieren erzielt wird, wobei das Festspannen des gesamten Verbunds in Betriebsstellung mit einem einzigen Schlüssel vorgenommen wird.

11. Abzweighahn (12) für eine Rohrleitung, welcher einen Korpus (25) und eine Unterlageplatte (3) aufweist, wobei der Korpus und die Unterlageplatte in Form einer einzigen Einheit aus einem Stück bzw. einer einteiligen Einheit ausgeführt sind und mindestens zwei Einrichtungen zur seitlichen Befestigung (14, 15) aufweisen, wobei die Befestigungseinrichtungen (14, 15), bezogen auf die Achse des Korpus des Hahns (12) radial verlaufen und sich im Wesentlichen einander gegenüber befinden und dabei mit einer Vorrichtung zur Anbringung auf der Rohrleitung ausgestattet sind, **dadurch gekennzeichnet, dass** die Vorrichtung nach einem der Ansprüche 1 bis 8 ausgebildet ist.

## Claims

1. Device for mounting a bearing plate (3) for a branch conduit on a pipe run, wherein the bearing plate comprises at least two means for lateral fixing or clamping (14, 15) and wherein the bearing plate is possibly a bearing plate for a branching cock or closing cock (12) that is envisaged for being mounted in sealed condition on the pipe run, with the mounting device comprising a means for clamping the bearing plate and fastening means adapted to cooperate with the fastening means of the bearing plate, and with the clamping means being an open and deformable ring band (4), with said bearing plate (3) and said ring band (4) forming a pipe clamp, **characterised in that** said fastening means are arranged at regular intervals from one end of said ring band to the other end in a manner that they adapt themselves to different outside diameters of pipe runs by connecting and clamping at least two means for fastening said ring band (4) on the fastening means (14, 15) of said bearing plate (3), with said ring band including principally a band and being mounted for pivoting on said bearing plate (3), and with said pivoting means including at least one element for mobile holding, which is provided with a bore with inside thread and is mounted for sliding and rotating movement in at least one end of said ring band, with the end of said ring band being folded around the mobile part, and with said fastening means comprising at least one opening adapted for the passage of the screw envisaged for cooperation with said pivoting means.

2. Device according to the preceding Claim, **characterised in that** the bearing plate (3) for a branch conduit on the predominantly charged pipe run comprises an outlet tube (8) substantially in its centre, whose axis is radial relative to the axis of the pipe run, wherein a resilient seal (10) with a sleeve (9) disposed on top is fitted into said tube and a second seal (11) in contact with said fastening means such as an inside thread of said distributing pipe (12) being arranged in the extension of said sleeve (9), and with said two seals (10, 11) and said sleeve (9) presenting an inside diameter that is substantially wider than the diameter of the bore for forming a branch conduit on said pipe run.

3. Device according to Claim 1, **characterised in that** the seal between said pipe clamp and said pipe run (2) is formed by a lip seal designed as integral element with a concave inner surface (35) whose radius of curvature is at least equal to the radius of curvature of said pipe run (2), with its peripheral section (36) including a projecting edge (37) that subdivides it into at least two partiai surfaces (38, 39), with the upper surface (40) of the seal passing over into a radius of curvature that endows it with a dome-shaped appearance, with the peripheral surfaces and the upper surface (38, 39, 40) being located in the recess provided under the base part of said bearing plate (3), with the inner section (41) delimiting the cavity that presents an open re-entrant angle that separates at least two surfaces (42, 43) of different inclination from each other, and with the inner upper surface (42) being oriented in an upward direction whilst the inner lower surface (43) presents a downward inclination, and with the pressure of the fluid (P1) flowing through the cavity of the lip seal being disintegrated into components whereof one (P2) is oriented towards the upper part of the recess whilst the other one (P3) is oriented towards the upper surface of the pipe run (2) via the outer surfaces of the seal, and with said seat being adapted to maintain the sealed condition relative to pipe runs (2a, 2b, 2c) of different diameters by variation of the intensity and the site of the pressure as well as the compressive force acting upon the pipe run (2a, 2b, 2c), independently of the latter's diameter.

4. Device according to Claim 1, **characterised in that** said fastening means are arranged at regular intervals from one end of the ring band to the other end in a manner that they adapt themselves to different outside diameters of pipe runs by the connection and clamping of at least two means for fastening said ring band (4) on the fastening means (14, 15) of said bearing plate (3), with said ring band being mounted for pivoting on said bearing plate and with one end of said ring band being folded in closed form around a mobile holding element with a bore and an internal thread, which forms a cylindrical nut (7) that permits a sliding and rotating movement in the fold on the end of said ring band, with said fastening means having at least one opening adapted for passing the screw envisaged for cooperation with said pivoting means, wherein said screw (5) is fastened, on the one hand, after the passage through an opening formed on the fold end of said ring band, in said cylindrical nut (7) whilst the head of said screw (5), on the other hand, is clamped on two tabs arranged in a bifurcated form (15), so as to form a means for laterally fastening said bearing plate.

5. Device according to the preceding Claim, **characterised in that** said ring band is mounted for pivoting motion by means of a closed fold on said bearing plate (3), which is formed on one end of said ring band around a mobile holding element with a bore and internal thread, which forms said cylindrical nut (7) that is combined with a means for releasable fastening such as a screw (5) to form a T-element that constitutes one of said means (14, 15) for lateral fastening of said bearing plate (3), with an opening of said ring band being provided on one end of said fold for permitting the passage of the connection section of said T-element of said bearing plate (3), and with said means for releasable fastening such as said screw (5) being passed through another opening that is provided on the end closer to the delimiting ring band, with said screw fastening the end of said ring band on said means for fastening said bearing plate.

6. Device according to any of the Claims 4 or 5, **characterised in that** said means for fastening said ring band from a first end are or present openings (24) designed for passing and holding said means for fastening said bearing plate, with said fastening means being disposed in a stepped arrangement from one end of said ring band.

7. Device according to any of the Claims 4 to 6, **characterised in that** said means for arranging said open and deformable ring band are or present elongate openings (24) that are disposed in a longitudinal direction, relative to the length of said ring band, with said closed folds on the end of said ring band (4), in particular, being disposed on that surface of said ring band, which is envisaged for clamping on the pipe run, in such a manner that at least one fold is clamped between the pipe run and the outside edges of said ring band (4), with a washer (6), which presents a plane surface whilst its other surface is bulged, being mounted on said screw (5), and with said plane surface, which contacts the head of said screw (5), and said bulged surface cooperating with a hollow bulged recess arranged in the gap of said bifurcation (15).

8. Device according to any of the Claims 4 to 7, wherein said bearing plate (3) is predominantly made of bronze, **characterised in that** said ring band comprises mainly a band of non-corroding material (4), particularly a steel strip coated with an inert material such as a composition based on epoxy powder.

9. Method of fastening a branching device on an auxiliary pipe on a charged or non-charged pipe run for water supply, **characterised in that** the pipe run, which has a diameter smaller than the distance separating the two means for laterally fastening said bearing plate (2a) and substantially equal to the distance separating said two means for laterally fastening said bearing plate (2b) and wider than the distance separating said two means for laterally fastening said bearing plate (2c), which method comprises at least the following successive steps of operation:
- preparing a pipe clamp (1) according to any of the Claims 1 to 8, with said ring band being cut to length in correspondence with the diameter of said pipe run (2a, 2b, 2c),
- placing and shaping said pipe clamp (1) on said pipe run and clamping the assembly in the operating position,
- screw-fastening and clamping the connecting device on said bearing plate,
- mounting a drilling machine (29) equipped with a drill, in sealed condition, on the upper connecting branch (28) of the chamber of the connecting device,
- drilling into said pipe run,
- removal of said drilling machine (29),
- closing the connecting device,
- connecting the branching system to said auxiliary pipe.

10. Method according to the preceding Claim, **characterised in that** the formation of said pipe clamp on said pipe run is achieved by pivotable mounting, with clamping of the complete assembly in the operating position being realised by means of a single key.

11. Branching cock (12) for a pipe run, which comprises a body (25) and a bearing plate (3), which body and which bearing plate are realised in the form of a single integral unit or one-part unit and comprise at least two means for lateral fastening (14, 15), with said fastening means (14, 15) extending in a radial direction relative to the axis of the body of the cock (12) and being arranged substantially in opposition to each other whilst they are equipped with a device for mounting on the pipe run, **characterised in that** the device is configured in correspondence with any of the Claims 1 to 8.
